# EUROPEAN PATENT APPLICATION

(11) **EP 1 675 140 A2**
(43) Date of publication of application: **28.06.2006**
(21) Application number: 05027863.9
(22) Date of filing: 20.12.2005
(51) Int. Cl.: H01F 41/02, H01F 1/08, H02K 1/27

(54) **Cylindrical sintered magnet, motor and method for producing cylindrical sintered magnet**

(30) Priority: 21.12.2004 JP 2004369797
(71) Applicant: TDK Corporation, Tokyo 103-8272 (JP)
(72) Inventor: Oshawa, Toshikuni TDK Corp., Tokyo 103-8272 (JP)
(74) Representative: HOFFMANN EITLE

(57) **Abstract**

It is an object of the present invention to, for a cylindrical sintered magnet, motor and method for producing a cylindrical sintered magnet, prevent slipping during rotation, dramatically reduce inner die damage and abrasion when molding, and reduce the post-sintering defect ratio even for a high-torque motor. Provided is a bipolar-anisotropic, cylindrical sintered magnet 8, whose outer periphery cross-sectional shape is a true circle, and whose inner periphery cross-sectional shape is an ellipse.

## Description

### BACKGROUND OF THE INVENTION

### Field of the Invention

The present invention relates to a bipolar-anisotropic, cylindrical sintered magnet, which is preferable for a motor used in the drainage pump of a washing machine or dishwasher and other applications, a motor provided therewith and a method for producing the cylindrical sintered magnet.

### Description of the Related Art

For motors used in the drainage pump of a washing machine or dishwasher, a bipolar-anisotropic, ring magnet, for example, is provided on a rotating shaft. In such a drainage pump motor, because the magnet-side acts as the rotor, a structure which integrates the shaft and the magnet is employed.

Conventionally, magnets which have been used in such motors have been, as disclosed in Patent Document 1 for example, produced so that their sintered outer periphery and inner periphery are a shape close to a true circle. This is because it was thought that if the magnet was not a shape close to a true circle, when mounted in a motor errors would occur in the assembly dimensions, thus causing the motor to rotate non-uniformly. That is, in the production technique for such a magnet, a molded body with the cross-sectional shape of the outer periphery thereof is obtained by molding in a magnetic field while paying attention to the shrinkage ratio (the ratio of shrinkages in the directions parallel and orthogonal to the magnetic field). The green compact is sintered so that the cross-sectional shape of the outer periphery thereof is turned into a true circle shape.

For example, when the contraction factor in the magnetic field direction is greater than that in the direction orthogonal to the magnetic field, the major axis of the elliptical shape is previously arranged in the magnetic field direction based on the shrinkage anisotropy.

In a motor in which the shaft and the magnet is integrated, if the fixation between the shaft and the magnet is poor, the magnet torque is not transmitted to the shaft. This can cause rotation problems, so that currently a groove for preventing slipping is formed on the end surface of the magnet side. This groove is provided so as to radially extend in the end surface of the magnet. When a resin is molded on the magnet end surface, the resin is molded as a protrusion onto this groove, thereby achieving a slip-prevention effect.
[Patent Document 1] Japanese Patent Laid-Open No. 59-19303 (Claims, FIG. 1)

### SUMMARY OF THE INVENTION

In the conventional production methods, which sinter the cross-sectional shape of the inner periphery into a shape close to a true circle, the inner die has been very often abraded and damaged, since the inner die has an elliptical non-circular cross-section. Further, defects in the magnet as a result of die abrasion, e.g. post-sintering crack formation, have also occurred. That is, in such dry anisotropic compression molding, in order to make the cross-sectional shape of the sintered inner periphery into a true circle, the entire die is designed to match the shrinkage anisotropy wherein it is especially important to fix the position of the center rod of the non-circular cross-section, which serves as the inner die, with a high degree of precision with respect to the magnetic field direction. Consequently, if the position of the non-circular cross-section center rod is out of alignment, there is a great danger that the center rod will be damaged. In addition, for a high-torque motor, merely adding a slip-prevention groove on the magnet end surface causes stress to concentrate at the slip-prevention end surface portion. Thus, for a resin-molding in which the shaft and the magnet are fixed with a resin, for example, defects such as resin tear or the like occur at the magnet end surface portion.

The present invention was created in view of the above-described problems, wherein it is an object of the present invention to provide a cylindrical sintered magnet, a motor using such magnet, and a method for producing a cylindrical sintered magnet, which can not only prevent slipping between a magnet and a resin during rotation even for a high-torque motor, but can also reduce the post-sintering defect ratio by lowering inner die damage and abrasion in molding.

The present invention employs the below construction to resolve these problems. That is, the present invention is directed to a bipolar-anisotropic, cylindrical sintered magnet, wherein the magnet has a cross-section orthogonal to the central axis comprising an outer periphery cross-section defined by a true circle, and an inner periphery cross-section defined by an ellipse. The cylindrical sintered magnet according to the present invention is bipolar-anisotropic in diameter direction.

In such a cylindrical sintered magnet, because the inner periphery cross-sectional shape is an irregular elliptical shape, when fixed to the motor shaft or the like with a resin material, the resin material between the shaft and the inner periphery of the magnet has an elliptical cross-section, whereby the entire inner periphery possesses a slip-prevention effect. In particular, since the inner periphery cross-sectional shape is an ellipse constituted from a curve whose curvature gradually changes, the concentration of stress can be dispersed more than that for other polyangular shapes or other such irregular-shapes. Through the dispersion of extreme stress concentration at the end surface portions or other areas, resin tear can be prevented in resin moldings which have a groove on the magnet end surface, for example.

The method for producing a cylindrical sintered magnet according to the present invention comprises forming a bipolar-anisotropic, cylindrical magnet molded body by filling a magnetic powder into a molding space which is provided with a mold and a center rod positioned in the mold; the mold has a cross-section orthogonal to the central axis comprising an inner periphery cross-section defined by an ellipse; and the center rod has a cross-section defined by a true circle, and then molding the magnetic powder in a magnetic field; and sintering the cylindrical magnet molded body; wherein in the sintering step, the molded body is sintered into a cylindrical sintered magnet wherein the magnet has a cross-section orthogonal to the central axis comprising an outer periphery cross-section defined by a true circle and an inner periphery cross-section defined by an ellipse based on the contraction anisotropy which occurs during sintering.

According to this method for producing a cylindrical sintered magnet, by making the cross-sectional shape of the mold inner periphery an elliptical shape, and the cross-sectional shape of the center rod a true circle, a cylindrical sintered magnet can be easily achieved, without needing to add an inner periphery processing step, whose outer periphery cross-sectional shape is a shape close to a true circle and whose inner periphery cross-sectional shape is an ellipse, due to the contraction anisotropy which occurs during sintering. Further, since a rod whose cross-sectional shape is a true circle is used as a center rod, if the positioning is determined to a certain extent, the center rod does not have to be fixed, and center rod damage and abrasion due to position misalignment can be prevented.

The cylindrical sintered magnet according to the present invention preferably has a cross-sectional ellipticity (minor axis/major axis) in a range of 85 to 95% at the inner periphery of its cylinder. Further, the cylindrical sintered magnet is preferably produced so that, at the inner periphery of the cylindrical sintered magnet, the ratio between the shortest and the longest of distances from the central axis to ellipsis points (the shortest radial distance/the longest radial distance (%)) is set in the range of 85 to 95%.

That is, according to such a cylindrical sintered magnet and production method thereof, inner die (center rod) abrasion can be reduced as a result of setting post-sintering the inner periphery shape of the cylindrical sintered magnet within the above range, whereby crack incidence can be lowered to 0.65% or less, thereby enabling lengthened life for the die and a high production yield.

The motor according to the present invention comprises a rotor which comprises a cylindrical sintered magnet and a shaft fixed to the cylindrical sintered magnet with a resin material and extending through the magnet, and a stator which rotatably supports the rotor, wherein the cylindrical sintered magnet is a bipolar-anisotropic, magnet wherein the magnet has a cross-section orthogonal to the central axis comprising an outer periphery cross-section defined by a true circle, and an inner periphery cross-section defined by an ellipse.

With such a motor, since the cylindrical sintered magnet according to the above present invention, which has an ellipse-shaped inner periphery cross-section, is fixed to the shaft by a resin or similar, the entire inner periphery of the cylindrical sintered magnet can be prevented from slipping even if a high torque is applied between the cylindrical sintered magnet and the shaft, whereby a preferable motor can be attained for the drainage pump or the like of a washing machine or dishwasher.

According to the present invention, the following advantageous effects can be obtained.

That is, according to the cylindrical sintered magnet of the present invention, since its outer periphery cross-sectional shape is a shape close to a true circle and its inner periphery cross-sectional shape is an elliptical shape, when fixed to a shaft or the like, excellent slip-prevention effects can be obtained from the entire inner periphery even against a high torque. Therefore, by fixing the cylindrical sintered magnet according to the present invention to a motor shaft, a motor having high-strength which is preferable for the drainage pump or the like of a washing machine or dishwasher can be attained. Further, according to the method for producing a cylindrical sintered magnet in accordance with the present invention, by making the cross-sectional shape of the center rod a true circle shape, a cylindrical sintered magnet can be easily produced whose inner periphery cross-sectional shape is not a true circle, but rather an irregular shape such as an ellipse. In addition, according to this method, center rod damage or die abrasion due to position misalignment can be prevented.

### BRIEF DESCRIPTION OF THE DRAWINGS

FIG. 1 is a longitudinal cross-sectional view illustrating the structure of a molding apparatus used in the production method for a cylindrical sintered magnet of one of the embodiments according to the present invention;
FIG. 2 is a transverse cross-sectional view illustrating the structure of a molding apparatus according to the present embodiments;
FIG. 3 is a transverse cross-sectional view illustrating a cylindrical sintered magnet according to the present embodiments;
FIG. 4 is a longitudinal cross-sectional view illustrating a cylindrical sintered magnet according to the present embodiments;
FIG. 5 is a perspective view illustrating a motor according to the present embodiments;
FIG. 6 is a front view illustrating a motor according to the present embodiments; and
FIG. 7A is a front view in an axial line direction illustrating a cylindrical sintered magnet fixed to a shaft; FIG. 7B is a cross-sectional view along the A-A' arrow of the front view; and and FIG. 7C is a cross-sectional view along the B-B' arrow of the front view.

### DETAILED DESCRIPTION OF THE PREFERRED EMBODIMENTS

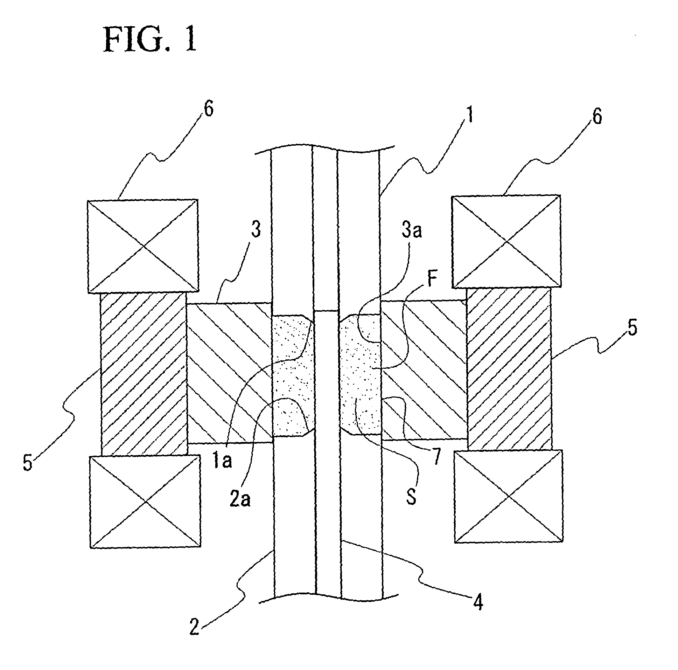

One embodiment of the cylindrical sinteredmagnet, amotor using such magnet, and a method for producing a cylindrical sintered magnet according to the present invention will now be explained with reference to FIGS. 1 to 7.

First, the structure of the cylindrical sintered magnet according to the present embodiment will be explained while describing the production method thereof.

The cylindrical sintered magnet according to the present embodiment is a bipolar-anisotropic, ring-shaped ferrite magnet which is fixed to a shaft of a below-described motor. This magnet is fabricated by dry anisotropic compression molding and a sintering treatment.

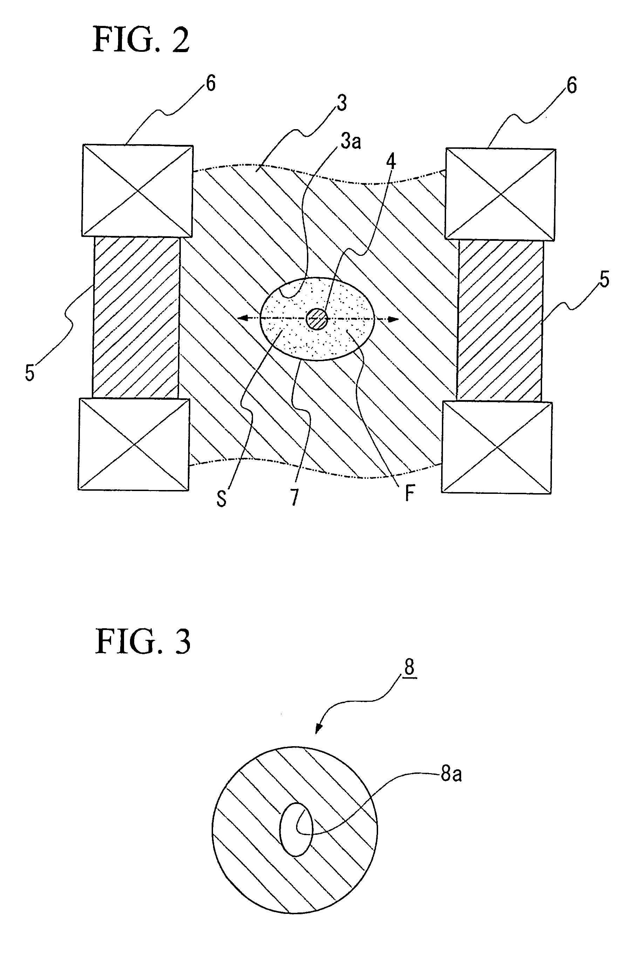

A compression molding apparatus for performing the dry anisotropic compression molding is illustrated in FIGS. 1 and 2. The apparatus comprises a cylindrical upper punch 1 and a lower punch 2, which are disposed coaxially with and opposed to each other and can move back and forth, a mold 3 (a mortar or die) which shares the central axis with the punches and has a through-hole 3a into which the upper punch 1 and lower punch 2 can be engaged, a center rod 4 which is provided in the through-hole 3a of the mold 3 and also coaxial with the mold, a pair of ferromagnetic bodies 5 for orientation arranged surrounding the mold 3, and a magnetic field applying coil 6 which is wound around the pair of ferromagnetic bodies 5 for orientation. That is, in this compression molding apparatus, a molding space which is substantially cylinder shaped (substantially cylindrical molding space) S filled with a ferrite powder (magnet powder) F is formed by the upper punch 1, lower punch 2, mold 3 and center rod 4.

While the upper punch 1 and lower punch 2 are both nonmagnetic bodies, their material is not especially limited. For example, stainless steel, a copper-beryllium alloy, high-manganese steel, bronze, brass and nonmagnetic cemented carbide can be used as the nonmagnetic bodies. Circular protrusions 1a and 2a, whose outer periphery on the inner periphery edge is a conical convex surface, are formed on the lower end of the upper punch 1 and the upper end of the lower punch 2. Since the magnetic field applying coil 6 generates a magnetic field (a magnetic field in a direction which is orthogonal to the compression direction) which transverses in a diameter direction (direction of the arrow in FIG. 2) the molding space S for molding the ferrite powder F in the magnetic field, the coil 6 is formed from pure iron, silicon steel sheet or the like.

The cross-sectional shape of the inner periphery of the mold 3 is formed into an elliptical shape, as illustrated in FIG. 2, in such a manner that the cross-sectional shape of the outer periphery of the cylindrical sintered magnet is formed into a true circle at a cross-section orthogonal to the central axis based on the shrinkage anisotropy during sintering. In addition, the cross-sectional shape of the above-described center rod 4 is formed into a true circle in order that the cross-sectional shape of the inner periphery of the cylindrical sinteredmagnet is formed into an elliptical shape based on the shrinkage anisotropy during sintering. In FIG. 2 and the below-described FIG. 3, ellipticity is displayed smaller than in reality in order to emphasize the elliptical shape.

That is, the reason for making the cross-sectional shape of the inner periphery of the mold 3 into an elliptical shape is that the cross-section has different shrinkages during sintering in the parallel and perpendicular directions with respect to the magnetic field. This is because if the cross-sectional shape of the molding is made into a true circle shape, during sintering the cross-section contracts to form an elliptical shape, whereby a great deal of processing is required to make into a true circle. Further, the reason for making the cross-sectional shape of the center rod 4 into a true circle is to modify the cross-sectional shape of the inner periphery of the molded body, which was a true circle, into an irregular elliptical shape based on the shrinkage anisotropy. When the contraction factor in the magnetic field direction is greater than that in the direction orthogonal to the magnetic field, as shown in FIG. 2, the major axis of the elliptical shape of the molding space S is previously arranged in the magnetic field direction based on the shrinkage anisotropy.

To produce the cylindrical sintered magnet according to the present embodiment, first, in the above-described compression molding apparatus, ferrite powder F is filled into the molding space S, after which the upper punch 1 and lower punch 2 are caused to move relative to each other with respect to the mold 3, whereby the ferrite powder F is compression molded in a magnetic field, to thereby form a molded body 7 (cylindrical magnet molded body). In the compression molding of the ferrite powder F in the molding space S, a desired compression molding density is achieved by lowering the upper punch 1 or raising the lower punch 2, or through a combination thereof.

During this compression molding, the ferromagnetic bodies 5 for orientation and magnetic field applying coil 6 are used to apply a magnetic field in the above-described direction onto the molded body 7. As shown in FIGS. 1 and 2, the magnetic field during the molding is in a direction orthogonal to the direction in which the ferrite powder F (magnetic powder) is compressed.

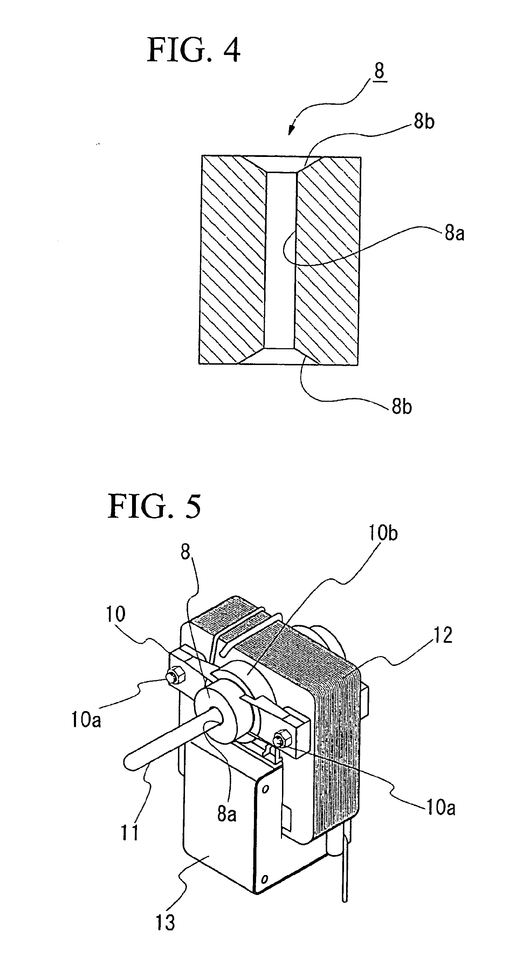

Next, this molded body 7 is subjected to a sintering treatment under prescribed conditions (e.g. in air at 1,230°C for 1 hour), to thereby yield a cylindrical sintered magnet 8, as illustrated in FIGS. 3 and 4.

The cylindrical sintered magnet 8 produced in this manner has its outer periphery cross-sectional shape formed into a true circle shape, and, has its center through-hole 8a shape, i.e. inner periphery cross-sectional shape, formed into an elliptical shape. Such a cylindrical sintered magnet 8 has its ellipticity of the inner periphery cross-sectional shape set in a range of 85 to 95%.

Further, on this cylindrical sintered magnet 8, an inner diameter beveled portion 8b, such as that illustrated in FIG. 4, is formed on both edges of the inner periphery by the protrusions 1a and 2a illustrated in FIG. 1.

Next, a motor which uses this cylindrical sintered magnet 8 will be described with reference to FIGS. 5 to 7.

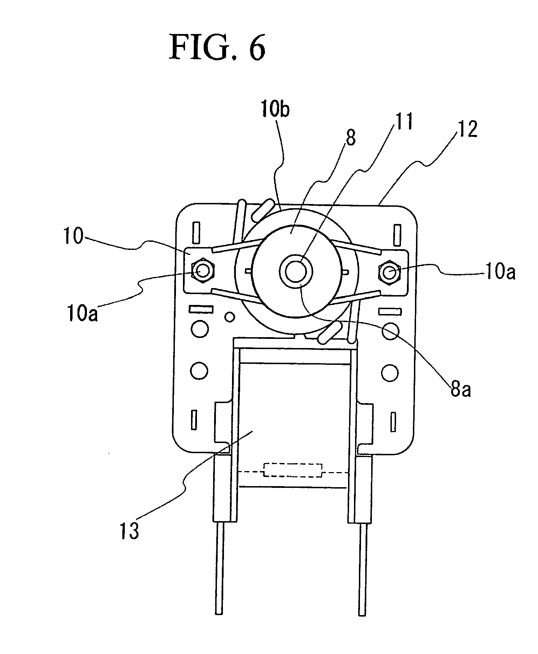

The motor according to the present embodiment is used in the drainage pump of a washing machine, dishwasher or other such machine. As illustrated in FIGS. 5 and 6, the present motor comprises a cylindrical sintered magnet 8 serving as a rotor, a shaft 11, which is fixed by the cylindrical sintered magnet 8 serving as a rotor and a resin (adhesive material) 14 in a penetrating manner on the cylindrical sintered magnet 8, an iron core (stator) 12, around which a coil 13 is wound, for applying a magnetic field on the cylindrical sintered magnet 8 when the coil 13 is powered, and a support member 10 for supporting the iron core 12 so that the shaft 11 and cylindrical sintered magnet 8 can rotate.

Both ends of the support member 10 are fixed to the iron core 12 with bolts 10a. The support member 10 is penetrated by and supports the cylindrical sinteredmagnet 8 in a rotatable manner in a cylindrical cover portion 10b provided in a center portion. The coil 13 is wound around a lower portion of the iron core 12, whose upper portion is provided so as to cover around the cylindrical sintered magnet 8.

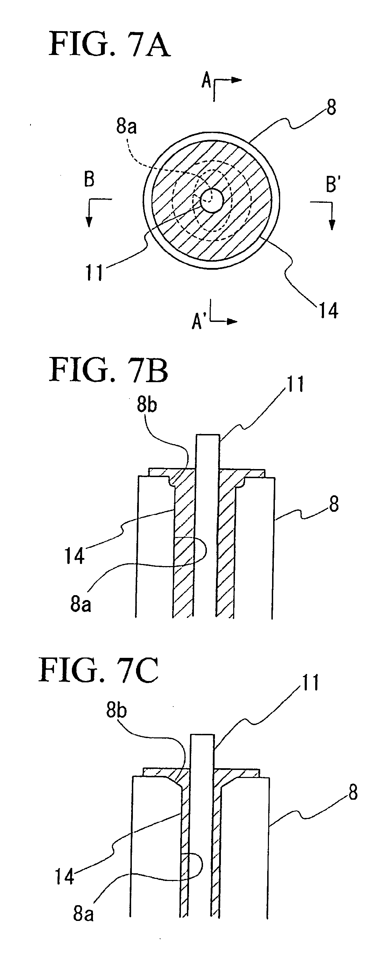

As illustrated in FIGS. 7A, 7B and 7C, the shaft 11 penetrates through the cylindrical sintered magnet 8 center through-hole 8a and is fixed by the resin 14. FIG. 7A is a front view in the axial line direction illustrating the cylindrical sintered magnet 8 fixed to the shaft 11; and FIGS. 7B and 7C are cross-sectional views along the A-A' arrow and B-B' arrow of the front view. For ease of understanding, in FIG. 7 only the resin 14 portion is marked with hatching.

As illustrated in FIG. 7A, the resin 14 packed in the center through-hole 8a has a cross-sectional elliptical shape, whereby the resin possesses a high slip-prevention effect during rotation. The resin 14 is formed so as to cover both end surfaces of the cylindrical sintered magnet 8, whereby it serves to increase adhesion strength. Further, a groove (not shown in the drawings) is provided on the periphery of the shaft 11 for slip prevention with the resin 14.

In this motor, the shaft 11 and the cylindrical sintered magnet 8 serving as the rotor are rotated with the torque generated by the interaction of the rotating magnetic field from the iron core 12, which is generated by flowing current rectified in a certain timing through the coil 13, with the magnetic field formed by the bipolar-anisotropic cylindrical sintered magnet 8.

Thus, in the present embodiment, because the cross-sectional shape of the cylindrical sintered magnet 8 inner periphery is an irregular elliptical shape, when fixed to the shaft 11 with a resin 14, the resin 14 in the center through-hole 8a is formed into an elliptical cross-sectional shape, thereby providing the entire inner periphery with a slip-prevention effect. In particular, since the inner periphery cross-sectional shape is an ellipse constituted from a curve whose curvature gradually changes, the concentration of stress can be dispersedmore than that for other polyangular shapes or other such irregular-shapes. Therefore, extreme stress concentration at the end surface portions or the like can be dispersed, whereby the cylindrical sintered magnet 8 and the resin 14 can be prevented from slipping against each other even when a high torque is applied to the shaft 11. Further, resin tear and other such problems can be prevented.

In addition, by making the cross-sectional shape of the mold 3 inner periphery an elliptical shape and the cross-sectional shape of the center rod 4 a true circle shape, a cylindrical sintered magnet 8 can be easily produced whose outer periphery cross-sectional shape is a true circle, and, whose inner periphery cross-sectional shape is an ellipse, as a result of anisotropic contraction during sintering. Further, by using a center rod 4 whose cross-section is a true circle, if the positioning is determined to a certain extent, the center rod 4 does not have to be fixed, and damage and abrasion to the center rod 4 due to position misalignment can be prevented.

In addition, by setting ellipticity for the cross-sectional shape of the cylindrical sintered magnet 8 inner periphery to between from 85 to 95%, as is described in the below Example, crack incidence (during 1,000 shot molding) after sintering can be reduced to 0.65% or less, whereby die life can be increased and a high production yield can be attained.

It should be noted that the technical scope of the present invention is not limited by the above-described embodiments, wherein various modifications may be incorporated within the scope intended by the gist of the present invention.

For example, in the cylindrical sinteredmagnet 8, a groove which extends in a radius direction away from the center through-hole 8a may be provided for further slip prevention on the edge surface. Such a scenario obviously increases the slip prevention effects.

### [Example]

For the cylindrical sintered magnet and the production method thereof according to the present invention, crack incidence after sintering was examined for cylindrical sintered magnets 8 which had been subjected to 1,000 shot molding, wherein the ellipticity (minor axis/major axis) of the cylindrical sintered magnets 8 inner periphery cross-sectional shape was varied from 95% to 83%. A conventional example (100% ellipticity case) whose inner periphery cross-sectional shape was a true circle shape was also examined in the same manner as a comparative example. The results are shown in Table 1.

**[Table 1]**

| | Conventional example | Example 1 | Example 2 | Example 3 |
|---|---|---|---|---|
| Ellipticity (minor axis/major axis) | 100% | 95% | 85% | 83% |
| Abrasion level | 0.40% | 0.06% | 0.09% | 0.30% |
| Post-sintering crack incidence | 2.50% | 0.45% | 0.65% | 1.80% |

The crack incidence of the present examples was lower in each case than that of the comparative example. In particular, when the ellipticity was from 85% to 95%, crack incidence was 0.65% or less, whereby it was thus learned that post-sintering defect ratio could be dramatically reduced.

## Claims

1. A bipolar-anisotropic, cylindrical sintered magnet, wherein the magnet has a cross-section orthogonal to the central axis comprising an outer periphery cross-section defined by a true circle and an inner periphery cross-section defined by an ellipse.

2. The cylindrical sintered magnet according to claim 1, wherein the inner periphery cross-section has an ellipticity within a range of 85 to 95%.

3. The cylindrical sintered magnet according to claim 1, wherein the magnet is a ferrite sintered magnet.

4. A motor comprising:
a rotor which comprises a cylindrical sintered magnet and a shaft fixed to the cylindrical sintered magnet with an adhesive material and extending through the magnet; and
a stator which rotatably supports the rotor; wherein
the cylindrical sintered magnet is a bipolar-anisotropic magnet wherein the magnet has a cross-section orthogonal to the central axis comprising an outer periphery cross-section defined by a true circle and an inner periphery cross-section defined by an ellipse.

5. The motor according to claim 4, wherein the adhesive material is a resin material.

6. The motor according to claim 4, wherein the cylindrical sintered magnet is a ferrite sintered magnet.

7. The motor according to claim 4, wherein the inner periphery cross-section of the cylindrical sintered magnet has an ellipticity within a range of 85 to 95%.

8. A method for producing a bipolar-anisotropic, cylindrical sintered magnet, comprising the steps of:
forming a bipolar-anisotropic, cylindrical magnet molded body by filling a magnetic powder into a molding space which is provided with a mold and a center rod positioned in the mold; the mold has a cross-section orthogonal to the central axis comprising an inner periphery cross-section defined by an ellipse; and the center rod has a cross-section defined by a true circle, and then molding the magnetic powder in a magnetic field; and
sintering the cylindrical magnet molded body; wherein
in the sintering step, the molded body is sintered into a cylindrical sintered magnet wherein the magnet has a cross-section orthogonal to the central axis comprising an outer periphery cross-section defined by a true circle and an inner periphery cross-section defined by an ellipse based on the contraction anisotropy which occurs during sintering.

9. The method for producing a cylindrical sintered magnet according to claim 8, wherein at the inner periphery of the cylindrical sintered magnet, the ratio of the shortest and the longest of distances from the central axis is set within a range of 85 to 95%.

10. The method for producing a cylindrical sintered magnet according to claim 8, wherein the magnetic field during the molding is in a direction orthogonal to the direction in which the magnetic powder is compressed.

11. The method for producing a cylindrical sintered magnet according to claim 10, wherein the molding is conducted under the major axis of the ellipse in the molding space is positioned along the magnetic field application direction.
